# EUROPÄISCHE PATENTANMELDUNG

(11) **EP 2 006 322 A1**
(43) Veröffentlichungstag der Anmeldung: **24.12.2008**
(21) Anmeldenummer: 08010777.4
(22) Anmeldetag: 13.06.2008
(51) Int. Cl.: C08J 3/12, C08L 91/06

(54) **Mikronisierte Wachsmischungen mit reduzierter Staubentwicklung enthaltend Polyethylenglykolverbindungen (PEG)**

(30) Priorität: 20.06.2007 DE 102007028308
(71) Anmelder: Clariant International Ltd., 4132 Muttenz (CH)
(72) Erfinder: Heinze, Anja, 65239 Hochheim / Main (DE); Krendlinger, Ernst, Dr., 86316 Friedberg (DE); Wernicke, Michael, Dr., 4303 Kaiseraugst (CH)
(74) Vertreter: Hütter, Klaus

(57) **Zusammenfassung**

Wachsmischungen mit reduzierter Staubentwicklung enthaltend zwei oder mehr Komponenten A, B, C und/oder D, wobei die Komponente A als Hilfsmittel agiert und ein oder mehrere Polyethylenglykole oder Polyethylenglykolderivate enthält und die Komponente B für ein oder mehrere Amidwachse, die Komponente C für ein oder mehrere Kohlenwasserstoffwachse und die Komponente D für ein oder mehrere oxidierte langkettige Kohlenwasserstoffwachse steht.

## Beschreibung

Die Erfindung betrifft Wachsmischungen fein gemahlener Wachse, enthaltend zwei oder mehr Komponenten A, B, C und/oder D die eine reduzierte Staubentwicklung aufweisen.
Der Einsatz von Wachsen als Verarbeitungshilfsmittel für Kunststoffe, zur Dispergierung von Pigmenten in Kunststoffen, als Zusatz in Druckfarben und Lacken, als Verarbeitungshilfsmittel für Pulverlacke und in einer Reihe weiterer Anwendungen ist bekannt. Vielfach werden für diese Anwendungen Wachse in gemahlener Form benötigt, wodurch eine energieärmere und damit wirtschaftlichere Verarbeitung und eine bessere Verteilung und geringere Dosierung möglich werden. Bekannt sind solche Produkte auf Basis von Kohlenwasserstoffen oder Amidwachsen. Diese sind leicht mahlbar und werden für unterschiedliche Anwendungen auch mit anderen Produkten, z. B. PTFE-Pulvern, kombiniert.
Mit unpolaren Medien wie aliphatischen oder aromatischen Lösemitteln, Polyethylen, Polypropylen und anderen unpolaren Stoffen ist die Verträglichkeit dieser unpolaren Wachse sehr gut. Mehr und mehr wird aber auch für polare Systeme nach fein gemahlenen Wachsen gesucht, da unpolare Wachse hier nur zum Teil eingesetzt werden können, weil es oft zu Unverträglichkeiten kommt.
Alternativ einsetzbar hierfür sind oxidierte Kohlenwasserstoffwachse oder polare Naturwachse und deren Derivate, wie Montanwachssäurederivate.
Solche Produkte sind bekannt, wie beispielsweise Ceridus^{®} 3715 oder Ceridust^{®} 5551 der Clariant Produkte (Deutschland) GmbH. Ihre Anwendung ist aber eingeschränkt wegen der geringen Ausbeute bei der Mahlung und der damit verbundenen Unwirtschaftlichkeit. Alternativ können Wachspulver über die Sprühtrocknung hergestellt werden, hier kann es jedoch Einschränkungen bei der thermischen Belastbarkeit und die Viskosität sowie bei der Kombination verschiedener Wachse bzw. Wachspulver gegeben.

Aufgrund der bekannten Mahltechniken und der somit hergestellten Feinstpulver ist die Herstellung und eine Verarbeitung beim Anwender durch Explosionsgefahren durch entstehende Stäube ein Nachteil, der durch die erfindungsgemäßen Wachsformulierungen vermieden werden kann.

Aufgabe ist es Wachsmischungen bereitzustellen, die bei der Herstellung zum Mahlvorgang gegeben werden können, ohne die Wirtschaftlichkeit des Prozesses oder das Endprodukt in seinen Eigenschaften negativ zu beeinflussen und gleichzeitig die Entwicklung von Stäuben bei der Herstellung und/oder Verarbeitung zu minimieren, was die bisher im Stand der Technik bekannten Produkte nicht vermochten.

Überraschend wurde gefunden, dass durch Zugabe von Wachsmischungen enthaltend Polyethylenglykol oder dessen Derivate zu den zu vermahlenden Wachskomponenten die Entwicklung von Stäuben bei der Herstellung und/oder Verarbeitung der fein gemahlenen Wachsprodukte minimiert werden kann.

Die vorliegende Erfindung betrifft daher Wachsmischungen mit reduzierter Staubentwicklung enthaltend zwei oder mehr Komponenten A, B, C und/oder D,
wobei die Komponente A als Hilfsmittel agiert und ein oder mehrere Polyethylenglykole oder Polyethylenglykolderivate enthält.
Als Komponente B können Amidwachse, als Komponente C Kohlenwasserstoffwachse und als Komponente D oxidierte langkettige Kohlenwasserstoffwachse eingesetzt werden.

Bevorzugt handelt es sich bei dem Polyethylenglykol um Polyethylenglykole mit einer Funktionalisierung mit Dihydroxy und einem mittleren Molekulargewicht Mw von 2.700 bis 45.000 g/mol, bevorzugt 5.000 bis 40.000 g/mol, besonders bevorzugt 8.000 bis 35.000 g/mol.
Beispiele für erfindungsgemäß bevorzugt einsetzbare Polyethylenglykole sind:
Polyethylenglykol 10000 S Flakes, Polyethylenglykol 12000 S Flakes, Polyethylenglykol 20000 S Flakes oder Polyethylenglykol 35000 S Flakes.
Der chemische Aufbau der erfindungsgemäß einsetzbaren Polyethylenglykole (PEG) ist leicht darstellbar, wenn man von den einfachen Glykolen ausgeht. Glykole sind zweiwertige primäre Alkohole, die somit zwei Hydroxylgruppen (OH-Gruppen) im Molekül enthalten.
Der Grundstoff, auf dem alle Ethylenglykole aufbauen, ist das reaktionsfreudige Ethylenoxid, das durch katalytische Direktoxidation aus Ethylen und Sauerstoff gewonnen wird.

   CH₂=CH₂ + ½ O₂ → CH₂CH₂O
Ethylenoxid ist eine Verbindung, die unter Ringöffnung bereitwillig Anlagerungsketten bildet, deren Glieder -CH₂CH₂O- sich ständig wiederholen.
   Aus Ethylenoxid und Wasser bildet sich Monoethylenglykol. Durch weitere Anlagerungen von Ethylenoxid entstehen die nächsten Glieder der Ethylenglykolreihe (Diethylenglykol, Triethylenglykol). Die hierauf folgenden zahlreichen Glieder der homologen Reihe (Tetra-, Penta-, Hexaethylenglykol usw.) werden Polyethylenglykole (PEG) genannt. Die allgemeine Summenformel der PEG lautet:

   H(OCH₂CH₂)ₙOH,
wobei die Zahl n die Gesamtzahl der am Aufbau des Moleküls beteiligten Ethylenoxidgruppen bedeutet und als Polymerisationsgrad bezeichnet wird.
PEG sind, wie alle hochpolymeren Substanzen, keine ganz einheitlichen chemischen Verbindungen, sondern Gemische einander sehr ähnlicher Polymerhomologie. Kennzeichnend für bestimmte PEG-Typen ist ihr mittleres Molekulargewicht Mw, das sich aus der jeweils analytisch bestimmbaren Hydroxylzahl ergibt.

Als Komponente B werden bevorzugt Amidwachse, z. B. als Umsetzungsprodukte aus Ammoniak und langkettigen Fettsäuren oder Hydroxyfettsäuren und/oder deren Mischungen, eingesetzt.

Bevorzugt handelt es sich bei den Amidwachsen um Umsetzungsprodukte aus langkettigen Aminen wie z. B. gehärtetes Talgfettamin, Stearylamin, Palmitylamin, Kokosfettamin und langkettigen Fettsäuren oder Hydroxyfettsäuren und/oder deren Mischungen.

Als Komponente C werden erfindungsgemäß Kohlenwasserstoffwachse, insbesondere Polyethylenwachse eingesetzt.

Als Komponente D werden oxidierte langkettige Kohlenwasserstoffwachse, vorzugsweise oxidierte Polyethylenwachse verwendet.

Besonders bevorzugt handelt es sich bei den Komponenten C und D um Polyethylenwachse, insbesondere um solche, die nach dem Ziegler-Verfahren und/oder mittels Metallocentechnologie hergestellt wurden.
In einer weiteren bevorzugten Ausführungsform handelt es sich bei den Komponenten C und D um Fischer-Tropsch Wachse.
Allgemein können auch Esterwachse als Komponenten B bis D eingesetzt werden. Neben Wachsen aller Art, können auch Kunststoffe mit PEG vermahlen werden, um die Staubentwicklung zu reduzieren.

Bevorzugt enthält die erfindungsgemäße Wachsmischung die Komponenten in folgenden Anteilen:
1 bis 5 Gew.-%, vorzugsweise 1 bis 4 Gew.-%, insbesondere 1 bis 3 Gew.-% Komponente A
0 bis 99 Gew.-%, vorzugsweise 10 bis 98 Gew.-%, insbesondere 40 bis 97 Gew.-% Komponente B
0 bis 99 Gew.-%, vorzugsweise 20 bis 98 Gew.-%, insbesondere 50 bis 97 Gew.-% Komponente C
0 bis 99 Gew.-%, vorzugsweise 10 bis 98 Gew.-%, insbesondere 20 bis 97 Gew.-% Komponente D
wobei die Summe der Komponenten 100 Gew.-% beträgt.

Die Erfindung betrifft auch die Verwendung von erfindungsgemäßen Wachsmischungen als Additiv in Lacken, Pulverlacken und Druckfarben, sowie zur Dispergierung von Pigmenten und Additiven in Kunststoffen, als Hydrophobierungsadditiv in Pflanzenschutzpräparationen oder als Gleitmittel in Kunststoffen, wie z. B. in PVC, PP, PE, PA sowie weiteren thermoplastischen Kunststoffe.

Die erfindungsgemäßen Wachsmischungen tragen zur besseren Verarbeitung bei den genannten Anwendungen bei, wie z. B. der Dosierung der Wachsmischungen. Des Weiteren zeichnen sich die erfindungsgemäßen Wachsmischungen durch eine Reduzierung der Staubentwicklung aus, was insbesondere bei staub-exkennzeichnungspflichtigen Bereichen eine große Rolle spielt und daher insbesondere bei Investitionen zu erheblichen Kostenreduzierungen führt.

### Beispiele

Herstellung von Wachsmischungen mit Polyethylenglykol Rohstoffkomponente. Für die Mahlung eingesetzt wurde eine Fließbettgegenstrahlmühle AFG 100, Fa. Hosokawa Alpine. Die Zielgrößen für die Partikel lagen bei einem d₅₀ von 5 bis 10 µm. Die Messung der Teilchengröße erfolgt nach der Laserbeugungsmethode mit dem Horiba Gerät LA 920.

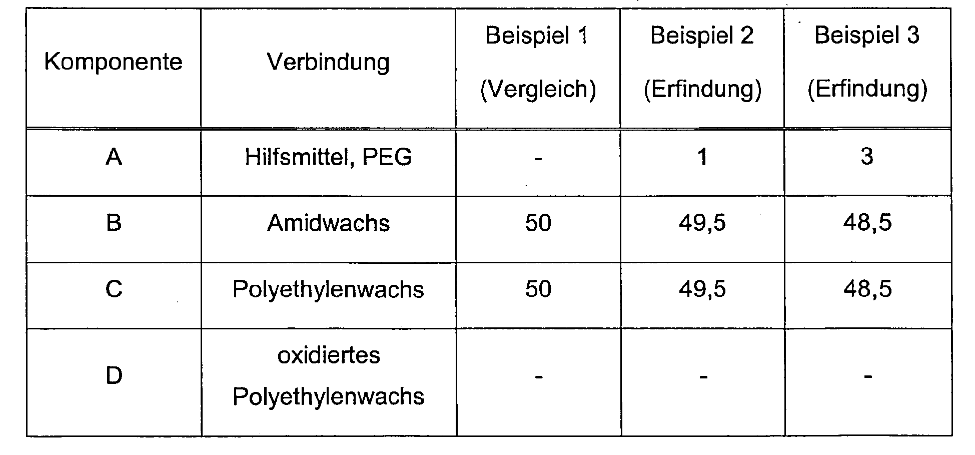

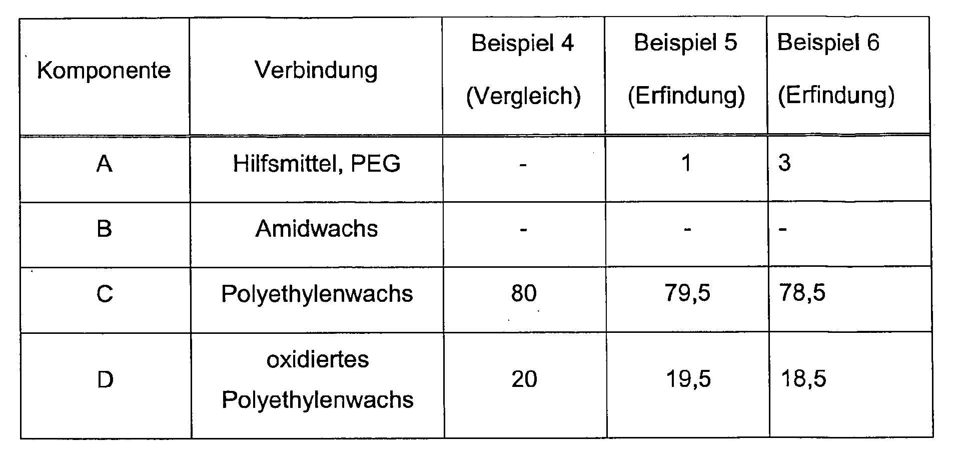

Rohstoffe für die Mahlung

| | | |
|---|---|---|
| Hilfsmittel Polyethylenglykol | - | PEG^{®} 35000 S |
| Amidwachs | - | Licowax^{®} C |
| Polyethylenwachs | - | Licocene^{®} PE 4201 |
| oxidiertes Polyethylenwachs | - | Licocene^{®} PE OX 4241 |

Alle Produkte sind Produkte der Fa. Clariant Produkte (Deutschland) GmbH.

Die Wachsmischungen aus den Mahlversuchen wurden einer Staubmessung unterzogen. Dazu wurde ein automatisches Staubmessgerät bestehend aus Messkasten mit Einsatz (Lichtquelle und Photozelle der Fa. Dr. B. Lange), Fallrohr 50 cm, Vorratsrohr mit Einfülltrichter und Magnetklappe und einem Messgerät verwendet. Methode in Anlehnung an DIN 55992-2.

Bestimmt wurden die Staubzahl in [%] und der Staubwert in [%]. Der Staubwert berechnet sich aus der Differenz der Staubzahl [%] und dem maximalen Wert [%], der am Messgerät angezeigt wird.

| Beispiel | Staubzahl [%] | Max. Wert [%] | Staubwert [%] |
|---|---|---|---|
| 1 | 109,9 | 74,7 | 35,2 |
| 2 | 104,6 | 76,3 | 28,3 |
| 3 | 101,6 | 79,4 | 22,2 |
| 4 | 12,5 | 8,8 | 3,7 |
| 5 | 11,1 | 8,6 | 2,5 |
| 6 | 9,8 | 8,3 | 1,5 |

### Anwendungsbeispiele

### Verwendung im Lack

Um gewährleisten zu können, dass die anwendungstechnischen Eigenschaften dieser Wachsmischungen durch die Zugabe der Komponente A (hier PEG 35000 S) nicht negativ beeinträchtigt werden, wurden die Mischungen im 2-Komponenten-Polyurethan-Lack geprüft.

Rezeptur 2-Komponenten-Polyurethan-Lack:

| 1. Komponente | Gew.-% |
|---|---|
| Desmophen 1300/75 %ig in Xylol (Fa. Bayer) | 32,0 |
| Walsroder Nitrocellulose E 510 in 20 % ESO (Fa. Wolff Celulosics) | 1,5 |
| Acronal 4 L 10 %ig in Ethylacetat (Fa. BASF) | 0,2 |
| Baysilone OL 17 10 %ig in Xylol (Fa. Borchers) | 0,2 |
| Ethylacetat (technische Qualität) | 10,4 |
| Butylacetat (technische Qualität) | 11,0 |
| Methoxypropylacetat (technische Qualität) | 10,8 |
| Xylol (technische Qualität) | 8,9 |
| | 75,0 |

| | |
|---|---|
| 2. Komponente | Gew.-% |
| Desmodur IL (Fa. Bayer) | 14,2 |
| Desmodur L 75 (Fa. Bayer) | 9,4 |
| Xylol (technische Qualität) | 1,4 |
| | 25,0 |

Eingesetzt wurden 2 % und 4 % der Wachsmischungen aus den Beispielen auf den Gesamtlack bezogen.

Bekannt ist, dass Wachse folgende Eigenschaften im Lack beeinflussen: Mattierung, Verbesserung der Kratzbeständigkeit (Schmissbeständigkeit), Slip (Rutschfestigkeit) oder Antirutscheigenschaft und viele weitere.

### Glanzmessung

Die Lacke wurden mittels Rahmenrakel mit Nassfilmschichtdicken von 60 µm auf Glasplatten aufgerakelt und mit dem Micro-Tri-Glossp (Fa. BYK-Gardner) bei einem Einfallswinkel von 60° gemessen.

| Beispiel | Glanz bei 60° | |
|---|---|---|
| | 2% | 4% |
| 1 | 86 | 47 |
| 2 | 82 | 46 |
| 3 | 85 | 50 |
| 4 | 88 | 48 |
| 5 | 83 | 45 |
| 6 | 85 | 48 |

### Bestimmung der Schmissbeständigkeit

Die Lacke wurden mittels Rahmenrakel mit Nassfilmschichtdicken von 60 µm auf Glasplatten aufgerakelt und mit dem Schmissbeständigkeitsprüfer ZST 2095 der Fa. Zehntner die Schmissbeständigkeit gemessen. Verwendet wurde eine Prüfscheibe aus Stahl und die Druckfeder 0-3 N.

| Beispiel | Angabe in Newton | |
|---|---|---|
| | 2% | 4% |
| 1 | 1,1 | 1,7 |
| 2 | 0,9 | 1,6 |
| 3 | 1,0 | 1,6 |
| 4 | 0,8 | 1,5 |
| 5 | 0,9 | 1,6 |
| 6 | 0,8 | 1,4 |

### Bestimmung der Gleitreibung

Die Lacke wurden mittels Rahmenrakel mit Nassfilmschichtdicken von 60 µm auf Glasplatten aufgerakelt und der Gleitreibungskoeffizient mit dem Friction/ Peel - Tester bestimmt. Es wurde ein Gewicht mit Ledersohle (349 g) als Zuggewicht gewählt.

| Beispiel | Gleitreibungskoeffizient | |
|---|---|---|
| | 2% | 4 % |
| 1 | 0,46 | 0,40 |
| 2 | 0,45 | 0,39 |
| 3 | 0,44 | 0,40 |
| 4 | 0,42 | 0,36 |
| 5 | 0,42 | 0,36 |
| 6 | 0,43 | 0,39 |

Es konnte gezeigt werden, dass durch den Einsatz von PEG als Hilfsmittel zur Staubreduzierung die lacktechnischen Eigenschaften unbeeinflusst bleiben bzw. sogar leicht verbessert werden.

## Patentansprüche

1. Wachsmischungen mit reduzierter Staubentwicklung enthaltend zwei oder mehr Komponenten A, B, C und/oder D, wobei die Komponente A als Hilfsmittel agiert und ein oder mehrere Polyethylenglykole oder Polyethylenglykolderivate enthält und die Komponente B für ein oder mehrere Amidwachse, die Komponente C für ein oder mehrere Kohlenwasserstoffwachse und die Komponente D für ein oder mehrere oxidierte langkettige Kohlenwasserstoffwachse steht.

2. Wachsmischungen fein gemahlener Wachse nach Anspruch **dadurch gekennzeichnet, dass** es sich bei der Komponente A um Polyethylenglykole oder deren Derivate mit einem mittleren Molekulargewicht Mw von 2.700 bis 45.000 g/mol handelt.

3. Wachsmischungen nach mindestens einem der Ansprüche 1 oder 2, **dadurch gekennzeichnet, dass** es sich bei den Amidwachsen um Umsetzungsprodukte aus Ammoniak und langkettigen Fettsäuren oder Hydroxyfettsäuren und/oder deren Mischungen handelt.

4. Wachsmischungen nach einem oder mehreren der Ansprüche 1 bis 3,
**dadurch gekennzeichnet, dass** es sich bei den Amidwachsen um Umsetzungsprodukte aus langkettigen Aminen wie gehärtetes Talgfettamin, Stearylamin, Palmitylamin, Kokosfettamin und langkettigen Fettsäuren oder Hydroxyfettsäuren und/oder deren Mischungen handelt.

5. Wachsmischungen nach einem oder mehreren der Ansprüche 1 bis 4,
**dadurch gekennzeichnet, dass** es sich bei den Kohlenwasserstoffwachsen der Komponenten C und/oder D um Polyethylenwachse handelt.

6. Wachsmischungen nach einem oder mehreren der Ansprüche 1 bis 5,
**dadurch gekennzeichnet, dass** die Komponenten C und D ausgewählt werden aus Polyethylenwachsen, die nach dem Ziegler-Verfahren und/oder mittels Metallocentechnologie hergestellt wurden.

7. Wachsmischungen nach einem oder mehreren der Ansprüche 1 bis 6,
**dadurch gekennzeichnet, dass** die Komponenten C und D ausgewählt werden aus Polyethylenwachsen, die über die Fischer-Tropsch-Synthese hergestellt werden.

8. Wachsmischungen nach einem oder mehreren der Ansprüche 1 bis 7,
**dadurch gekennzeichnet, dass** die Wachsmischung die einzelnen Komponenten in folgenden Anteilen enthalten:
1 bis 5 Gew.-% Komponente A
0 bis 99 Gew.-% Komponente B
0 bis 99 Gew.-% Komponente C
0 bis 99 Gew.-% Komponente D
enthält, wobei die Summe der Komponenten 100 Gew.-% beträgt.

9. Wachsmischungen nach einem der mehreren der Ansprüche 1 bis 8, **dadurch gekennzeichnet, dass** die KomponentenA bis D in fein verteilter Form vorliegen.

10. Wachsmischungen nach Anspruch 9, **dadurch gekennzeichnet, dass** die Komponenten A bis D in einer Korngröße von 5 bis 18 µm eingesetzt werden.

11. Verwendung von Wachsmischungen nach einem oder mehreren der Ansprüche 1 bis 10 als Additive in Lacken, Pulverlacken und Druckfarben, als Kratz- und Scheuerschutz-, Mattierungs-, Entgasungs- und Verlaufsmittel oder als Slipadditiv.

12. Verwendung von Wachsmischungen nach einem oder mehreren der Ansprüche 1 bis 10 zur Dispergierung von Pigmenten und Additiven in Kunststoffen.

13. Verwendung von Wachsmischungen nach einem oder mehreren der Ansprüche 1 bis 10 als Hydrophobierungsadditiv in Pflanzenschutzpräparationen.

14. Verwendung von Wachsmischungen nach einem oder mehreren der Ansprüche 1 bis 10 als Gleitmittel in Kunststoffen, insbesondere in thermoplastischen Kunststoffen, wie z. B. PVC, PP, PE oder PA.
